# FASCICULE DE BREVET EUROPEEN

(11) **EP 2 646 387 B1**
(45) Date de publication et mention de la délivrance du brevet: **20.08.2014**
(21) Numéro de dépôt: 11801795.3
(22) Date de dépôt: 30.11.2011
(51) Int. Cl.: C03C 27/12, B32B 17/10, C08K 5/00, C08L 29/14, G02B 27/01, C09D 11/00

(54) **VITRAGE FEUILLETE POUR SYSTEME DE VISUALISATION TETE HAUTE**
VERBUNDGLASSCHEIBE FÜR HEAD-UP DISPLAY SYSTEM
LAMINATED GLAZING FOR HEAD-UP DISPLAY SYSTEM

(30) Priorité: 03.12.2010 FR 1060081
(43) Date de publication de la demande: 09.10.2013
(73) Titulaire: Saint-Gobain Glass France, 92400 Courbevoie (FR)
(72) Inventeur: SABLAYROLLES, Jean, 60530 CROUY EN THELLE (FR); DEKONINCK, Alexandra, F-95460 Ezanville (FR); LABROT, Michael, F-52072 Aachen (FR)
(74) Mandataire: Lucas, Francois
(86) Numéro de dépôt international: PCT/FR2011/052820
(87) Numéro de publication internationale: WO 2012/072950

(56) Documents cités:
- EP-A- 0 635 538
- EP-A1- 0 102 502
- EP-A1- 0 568 999
- EP-A1- 2 110 237
- WO-A1-03/078160
- WO-A2-2008/132368
- DE-A1- 4 024 330
- DE-A1-102004 000 026
- GB-A- 844 540
- JP-A- 9 143 130
- US-A- 5 322 875
- US-A1- 2002 120 916
- US-A1- 2005 131 133
- US-A1- 2007 009 714

## Description

La présente invention se rapporte au domaine des systèmes de visualisation projetés sur des écrans du type transparent, en particulier les pare-brises automobile ou les vitrages pour bâtiment.

Tout particulièrement, même si elle n'y est pas limitée, la présente invention se rapporte au domaine des systèmes de visualisation dits tête haute, appelés HUD ou Head Up Display dans la technique. De tels systèmes sont utiles notamment dans les cockpits d'avion, les trains mais également aujourd'hui dans les véhicules automobiles des particuliers (voitures, camions, etc.).

Dans de tels systèmes, le vitrage est en général constitué d'une structure en sandwich, comprenant le plus simplement deux feuilles de matière résistante telles que des feuilles de verre. Les feuilles de matière résistante sont reliées entre elles par un feuillet intercalaire thermoformable comprenant ou constitué par le plus souvent du polyvinylbutyral (PVB).

De tels systèmes de visualisation tête haute, qui permettent d'afficher des informations projetées sur un vitrage qui se réfléchissent vers le conducteur ou l'observateur sont déjà connus. Ces systèmes permettent notamment d'informer le conducteur du véhicule sans que celui-ci éloigne son regard du champ de vision en avant du véhicule, ce qui permet d'accroître grandement la sécurité. Le conducteur perçoit une image virtuelle qui se situe à une certaine distance derrière le pare-brise.

De la manière la plus classique, on obtient une telle image en projetant une information sur un pare-brise ayant une structure feuilletée, c'est à dire formée de deux feuilles de verre et d'un intercalaire en matière plastique. Cependant le conducteur observe alors une image double: une première image réfléchie par la surface du pare-brise orientée vers l'intérieur de l'habitable et une seconde image par réflexion de la surface extérieure du pare-brise, ces deux images étant légèrement décalées l'une par rapport à l'autre. Ce décalage peut perturber la vision de l'information. Pour pallier ce problème, on peut citer la solution proposée dans le brevet US 5,013,134, dans lequel est décrit un système de visualisation tête haute utilisant un pare-brise feuilleté formé de deux feuilles de verre et d'un intercalaire en polyvinylbutyral (PVB) dont les deux faces extérieures ne sont pas parallèles mais en forme de coin, de sorte que l'image projetée par une source d'affichage et réfléchie par la face du pare-brise orientée vers l'habitacle soit pratiquement superposée à la même image provenant de la même source réfléchie par la face du pare-brise orientée vers l'extérieur. Pour supprimer l'image double, on réalise classiquement un vitrage feuilleté en forme de coin en utilisant une feuille intercalaire dont l'épaisseur décroît du bord supérieur du vitrage au bord inférieur. Cependant, il est nécessaire que le profil du PVB soit très régulier et ne présente pas de variations d'épaisseur, car ceux-ci se transmettent au cours de l'assemblage sur le pare-brise et conduisent à des variations locales d'angle.

Alternativement, il est proposé dans le brevet US 6,979,499 B2 d'envoyer un faisceau incident, de longueur d'onde appropriée, sur des luminophores directement intégrés dans le vitrage, susceptibles de répondre à l'excitation par l'émission d'une radiation lumineuse dans le domaine de la lumière visible. De cette façon, une image réelle et non plus virtuelle, est formée directement sur le pare-brise. Cette image est en outre visible par tous les passagers du véhicule. Le brevet US 6,979,499 B2 décrit en particulier un vitrage feuilleté avec un feuillet intercalaire du type polyvinylbutyral (PVB) dont les deux faces extérieures sont parallèles et dans lequel une couche de luminophores additionnelle est incorporée. Les luminophores sont choisis en fonction de la longueur d'onde du rayonnement d'excitation incident. Cette longueur d'onde peut être dans le domaine de l'ultraviolet ou de l'IR. Les luminophores, sous cette radiation incidente, réémettent un rayonnement dans le domaine du visible. On parle alors de down conversion lorsque le rayonnement incident est l'UV et d'up conversion lorsque le rayonnement incident est l'IR. Une telle construction permet selon ce document de restituer directement sur le pare-brise ou le vitrage une image de n'importe quel objet. Selon cette divulgation, des matériaux luminophores sont déposés sur l'ensemble d'une surface principale d'un des feuillets constituant le vitrage feuilleté (PVB ou verre) sous la forme d'une couche continue comprenant plusieurs types de luminophores. L'image recherchée est obtenue par l'excitation sélective d'une aire déterminée de la couche de luminophore. La localisation de l'image et sa forme sont obtenues au moyen d'une source d'excitation pilotée et modulée par des moyens extérieurs.

Cependant, les expériences menées par le demandeur ont montré que de tels dispositifs HUD, incorporant des luminophores dans le vitrage assemblé, se caractérisent par une luminance trop faible sous une source d'excitation UV conventionnellement non focalisée. De plus, la concentration des luminophores est limitée par la valeur de flou du pare-brise qui ne doit pas être trop élevée pour ne pas gêner la vision du conducteur.

En particulier, il apparaît que l'intensité lumineuse obtenue avec de tels dispositifs reste encore très insuffisante lorsque la luminosité extérieure est forte, et d'une manière générale en vision diurne, puisqu'elle ne dépasse pas quelques dizaines de candelas. Typiquement, on a mesuré sur un système du type «HUD » classique, c'est-à-dire fonctionnement selon les principes de la réflexion, qu'un rayonnement monochromatique était visible d'un observateur, par exemple au niveau de la zone de vision du conducteur d'un véhicule, si la luminance était de l'ordre de plusieurs centaines de cd/m², notamment notablement supérieure à 500 cd/m², voire 1000 cd/m², dans des conditions normales d'éclairage extérieur, de jour, du pare-brise.

Pour obtenir une telle luminance, il est possible d'utiliser des sources excitatrices générant une lumière UV concentrée et dirigée, délivrée par des sources plus spécifiques du type diode laser. Par concentré, il est entendu au sens de la présente description que la puissance surfacique, au niveau du vitrage, du faisceau issu de la source génératrice est supérieure à 120 mW.cm⁻² et de préférence comprise entre 200 mW.cm⁻² et 20 000 mW.cm⁻², voire comprise entre 500 mW.cm⁻² et 10 000 mW.cm⁻². Cependant, l'utilisation de telles sources ne peut être envisagée qu'à des puissances qui restent plafonnées, afin d'éviter les problèmes liés à la dangerosité du faisceau, notamment à l'extérieur du véhicule. En particulier, en travaillant avec une longueur d'onde inférieure à 410 nm, on peut éviter le passage de la majeure partie du rayonnement laser vers l'extérieur car à ces longueurs d'onde le PVB absorbe fortement le rayonnement UV.

Un autre problème primordial lié à l'utilisation des sources concentrées de lumière type laser tient au choix du luminophore utilisé : celui-ci doit présenter un rendement de conversion du rayonnement incident élevé mais ne doit pas se dégrader sous le rayonnement UV extérieur ni surtout sous le rayonnement UV concentré incident notamment du type laser, afin d'assurer à la fonction de visualisation une durée de vie convenable.

Dans un tel vitrage permettant la visualisation d'informations directement à sa surface, le choix du luminophore apparaît ainsi primordial et est nécessairement un compromis entre différentes caractéristiques et propriétés liées à une telle utilisation parmi lesquelles :
- une forte luminance assurée par un bon rendement quantique sous l'excitation UV incidente,
- une transparence telle que le flou (« haze ») ne soit pas supérieur à 2% et la transmission lumineuse supérieure à 70%,
- une compatibilité chimique avec le feuillet thermoplastique composant du vitrage,
- une coloration neutre, notamment lorsqu'il est présent en forte concentration dans le vitrage, telle que par exemple mesurée par le test dit « Yellowness Index » selon la norme DIN 6167,
- une durabilité maximale aux tests de vieillissement aux rayonnements UV solaires incidents, tels que notamment mesurés par le test Arizona ® dans le domaine,
- une durabilité maximale aux tests de vieillissement au rayonnement UV concentré incident, notamment laser, tels que notamment mesuré par le temps observé avant que la luminance initiale, mesurée en cd/m², soit réduite de moitié.

Plus précisément, la présente invention se rapporte à un vitrage feuilleté pour la visualisation d'informations du type pare-brise pour automobile ou vitrage pour bâtiment, comprenant un assemblage d'au moins deux feuilles transparentes de verre inorganique ou d'une matière organique résistante, reliées entre elles par un intercalaire d'une matière thermoformable ou par des feuillets multicouches incorporant un tel intercalaire, ledit vitrage étant caractérisé en qu'un matériau luminophore du type hydroxytéréphthalate, combiné avec un additif antioxydant, est intégré dans ledit intercalaire, permettant ladite visualisation.

On entend par hydroxytéréphthalate un diester dérivé de l'acide téréphthalique répondant à la formule générale :
R-OOC-Φ(OH)ₓ-COOR, 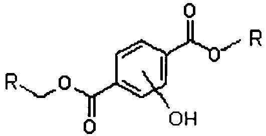 dans laquelle
   - Φ désigne un noyau benzénique substitué par au moins un groupement hydroxy OH,
   - R est une chaine hydrocarbonée comprenant de 1 à 10 atomes, de préférence de 1 à 5 atomes de carbone, en particulier de 1 ou 2 atomes de carbone, et
   - x est égal à 1 ou 2.

De préférence, le groupement hydroxy est en position 2 et/ou en position 5 sur le cycle aromatique. En particulier, ledit luminophore peut-être un dialkyl 2-5 dihydroxytéréphthalate selon la formule développée :

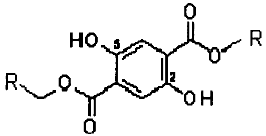

De préférence, ledit luminophore est le diéthyl-2,5-dihydroxytéréphthalate (HO)₂C₆H₂(CO₂CH₂CH₃)₂, dont la longueur d'onde d'émission est proche des 450 nm :

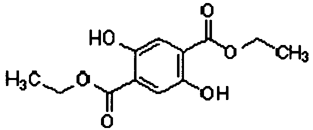

Typiquement dans le vitrage selon l'invention, le luminophore du type téréphtalate est solvaté dans ladite matière thermoplastique.

Il a été trouvé de façon surprenante que non seulement le choix d'un tel luminophore conduisait à des durées de vie prolongées sous un faisceau d'excitation concentré du type Laser ou plus radicalement sous des conditions d'ensoleillement classiques, cette durée de vie étant encore prolongée par l'utilisation d'un agent antioxydant de préférence choisi parmi les composés suivants :
Selon un premier mode de réalisation, l'additif antioxydant appartient au groupe des phénylamines.

Notamment, selon ce premier mode, l'additif antioxydant appartient au groupe des diphénylamines. C'est par exemple une diphényl amine telle que celle commercialisée par la société CIBA sous la référence IRGANOX L57.

Selon un second mode de réalisation, l'additif antioxydant comprend au moins un cycle benzénique comprenant au moins deux fonctions OH.

De tels additifs sont notamment et avantageusement choisis dans le groupe constitué par les résorcinoliques, les pyrocatécholiques, les hydroquinones, les pyrogalloliques ou les phloroglucinoliques.

Par résorcinoliques, on entend les composés organiques comprenant un cycle benzénique substitué par 2 fonctions OH en position 1 et 3, les autres positions pouvant être éventuellement substituées ou non par d'autres groupements.

Par pyrocatécholiques, on entend les composés organiques comprenant un cycle benzénique substitué par 2 fonctions OH en position 1 et 2, les autres positions pouvant être éventuellement substituées ou non par d'autres groupements.

Par hydroquinones, on entend les composés organiques comprenant un cycle benzénique substitué par 2 fonctions OH en position 1 et 4, les autres positions pouvant être éventuellement substituées ou non par d'autres groupements.

Par pyrogalloliques, on entend les composés organiques comprenant un cycle benzénique substitué par 3 fonctions OH en position 1, 2 et 3, les autres positions pouvant être éventuellement substituées ou non par d'autres groupements.

Par phloroglucinoliques, on entend les composés organiques comprenant un cycle benzénique substitué par 3 fonctions OH en position 1, 3 et 5, les autres positions pouvant être éventuellement substituées ou non par d'autres groupements.

Par exemple la matière thermoformable constituant ledit intercalaire est choisie dans le groupe des PVB, des PVC plastifiés, du polyuréthane PU ou des éthylènes vinyle acétate EVA.

De préférence, la matière thermoformable est le PVB.

Selon un mode de réalisation possible, les feuilles transparentes sont reliées entre elles par un feuillet multicouche intégrant un intercalaire PVB, par exemple un feuillet comprenant une succession de couches PVB/PET/PVB, dans lequel PET est le polyéthylène téréphtalate.

L'invention se rapporte en outre à un procédé de fabrication d'un vitrage feuilleté selon l'une des réalisations précédentes, dans lequel on dépose la couche mince sur le feuillet thermoplastique du type PVB par une technique choisie parmi les techniques de sérigraphie, les techniques du type jet d'encre ou encore les techniques du type offset, flexogravure ou encore héliogravure, sous la forme d'une solution d'un alcool avec un liant du type PVB, puis on effectue le feuilletage du vitrage sous autoclave.

L'invention se rapporte enfin à un dispositif de visualisation d'une image sur un vitrage transparent, comprenant un vitrage feuilleté selon l'une des réalisations précédentes et une source génératrice de rayonnement UV concentré du type laser dont le rayonnement est compris entre 350 et 410 nm, le rayonnement UV étant dirigé vers la ou les zones du vitrage le luminophore du type téréphtalate et de l'additif antioxydant.

Dans le dispositif de visualisation, la source génératrice de rayonnement UV comprend typiquement au-moins une diode laser émettant un rayonnement d'excitation UV dont la longueur d'onde est inférieure à 410 nm et de préférence est comprise entre 350 et 405 nm.

Par exemple, la puissance surfacique du faisceau issu de la source génératrice est supérieure à 120 mW.cm⁻² et de préférence comprise entre 200 mW.cm⁻² et 20 000 mW.cm⁻², voire comprise entre 500 mW.cm⁻² et 10 000 mW.cm⁻².

De préférence, le dispositif de visualisation comprend en outre des moyens de modulation de la puissance de la source génératrice de rayonnement UV notamment afin d'adapter la luminance aux conditions d'éclairage extérieur du vitrage, par exemple en fonction des conditions d'ensoleillement du vitrage.

Par exemple les moyens de modulations peuvent définir au moins une puissance convenant pour une utilisation de jour et au moins une puissance, inférieure à la précédente et convenant pour une utilisation de nuit.

L'invention et ses avantages seront mieux compris à la lecture du mode de réalisation de l'invention qui suit, en relation avec la figure unique jointe.

La figure jointe permet d'illustrer l'invention et ses avantages :
Sur cette figure, on a schématisé un pare-brise et un dispositif selon l'invention :
   Le pare-brise 1 se compose de deux feuilles 2 et 9 typiquement en verre mais qui pourraient également être constituées de feuillets de matière plastique résistante du type polycarbonate. Entre les deux feuillets, est présent un feuillet intercalaire plastique 3 tel que du PVB (polyvinylbutyral), du PVC plastifié, PU ou EVA ou bien encore un feuillet thermoplastique multicouche incorporant par exemple du PET (polyéthylène téréphtalate), dont la succession des couches est par exemple PVB/PET/PVB.

Sur au-moins une partie de la face interne du feuillet thermoplastique intercalaire 3 ont été déposées avant feuilletage, c'est-à-dire avant l'assemblage des différents feuillets, des particules de luminophore organique du type téréphtalate et l'additif antioxydant selon l'invention.

Les particules de luminophore présentent une répartition de taille majoritairement comprise entre 1 et 100 microns. Par majoritairement il est entendu que plus de 90% des particules composant la poudre commerciale ont un diamètre compris entre 1 et 100 microns. De manière préférée, les particules de luminophore du type téréphtalate/l'additif antioxydant subissent un traitement préalable favorisant leur imprégnation dans le feuillet thermoplastique de PVB. Plus précisément, les particules sont préalablement enrobées dans un liant à base de PVB.

Une source laser 4 émet un rayonnement lumineux d'excitation est utilisée pour envoyer un rayonnement concentré incident 7 de longueur d'onde proche de 400 nm. Le luminophore du type téréphthalate 10, solvaté sous forme moléculaire dans le feuillet thermoplastique intercalaire 3, présente un fort coefficient d'absorption du rayonnement incident. Il réémet ensuite un rayonnement dans le domaine visible, c'est-à-dire un rayonnement proche de 450 nm avec un rendement supérieur à 80%.

Le rayonnement visible émis par le luminophore est alors directement observable par l'oeil 5 du conducteur, qui visualise ainsi l'objet sur le pare-brise sans avoir à quitter la route des yeux. De cette façon, une image peut être directement matérialisée sur un pare-brise feuilleté sans nécessiter d'adapter la structure de celui-ci, par exemple l'épaisseur du feuillet intercalaire, ce qui permet une fabrication économique des systèmes HUD.

La source utilisée pour générer le rayonnement concentré est par exemple une source UV du type source UV laser. Elle est par exemple mais non limitativement du type laser à solide, diode laser à semi-conducteurs, lasers à gaz, lasers à colorant, laser à excimère. De manière générale toute source connue générant un flux concentré et dirigé, au sens de la présente invention, d'un rayonnement UV peut être utilisée comme source d'excitation selon l'invention.

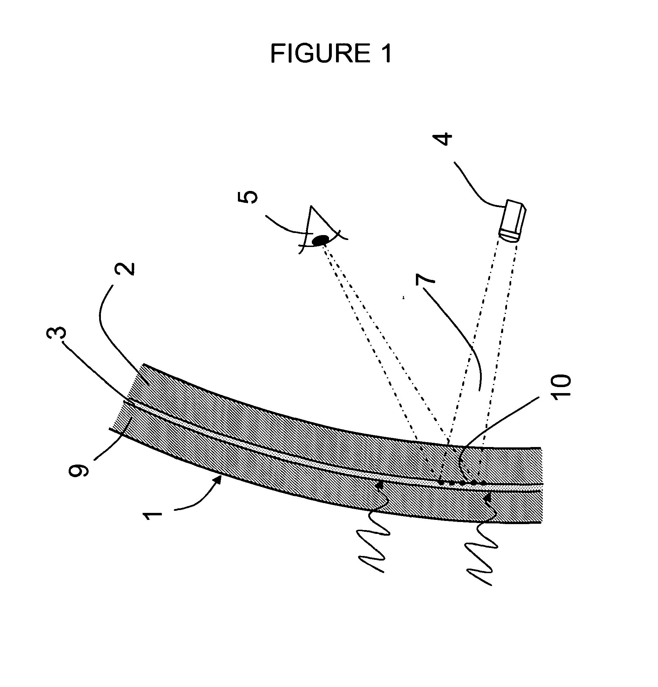

Selon un mode possible de réalisation, il est possible d'utiliser un projecteur DLP pour moduler l'onde excitatrice selon le mode décrit dans la demande US 2005/231652, paragraphe [0021]. Il est également possible selon l'invention d'utiliser comme source d'excitation UV un dispositif tel que décrit dans la demande US2004/0232826, notamment tel que décrit en connexion avec la figure 3.

Le dépôt du luminophore (et de l'additif antioxydant) sur le feuillet PVB peut être réalisé par exemple par des techniques de sérigraphie, par des techniques du type jet d'encre ou encore par des techniques du type offset, flexogravure ou héliogravure.

Selon une autre voie possible, Le dépôt du luminophore (et de l'additif antioxydant) sur le feuillet PVB peut être réalisé par pulvérisation (spray). Selon un exemple de mise en oeuvre de cette technique, il est pratiqué sur la solution initiale une atomisation pneumatique avec des tailles de gouttes centrées entre 50 et quelques centaines de micromètres. Les pressions d'utilisations sont généralement situées entre 3 et 6 bars. Le débit de liquide est compris typiquement entre 10 et 100 mL/min. La distance échantillon-buse est par exemple comprise entre 5 et 30 cm.

Alternativement, le dépôt par l'une des techniques précédentes peut être effectué par dissolution ou dispersion des particules de luminophores dans au-moins une matrice qui est choisie pour faciliter l'incorporation et la dissolution très rapide du luminophore et de l'additif dans le feuillet thermoplastique, notamment lors du passage en autoclave permettant l'assemblage du vitrage feuilleté. Des liants à base de PVB ou d'autres matières plastiques du type PMMA se sont montrés particulièrement performants pour une telle fonction.

Il est apparu que les luminophores 10 de la famille téréphthalate et l'additif antioxydant pouvaient ainsi être incorporés dans le feuillet plastique PVB de façon suffisamment intime pour que leur présence ne puisse plus être détectée par les techniques classiques de microscopie lumineuse. Sans que cela puisse être interprété comme une quelconque théorie, une explication possible serait que les molécules de téréphthalate/antioxydant sont entièrement solvatées dans le feuillet PVB après passage en autoclave, c'est-à-dire qu'elles s'y retrouvent au final sous forme de molécules individualisées dans la matière plastique.

Certainement en raison de ce phénomène, il a été trouvé par le demandeur que dans le cadre d'une application de visualisation d'une image au travers d'un vitrage transparent, l'utilisation de luminophores du type téréphthalate permet de répondre efficacement aux impératifs suivants, nécessaires à une telle application :
a) une netteté de l'image acceptable,
b) une intensité de luminescence suffisante pour qu'elle soit observable par le conducteur,
c) un flou, engendré par l'apposition de la couche sur le pare-brise, mesuré selon la norme Ansi Z26.1 1996, inférieur à 2% voire même inférieur à 1%,
d) une transmission lumineuse supérieure à 70% et de préférence supérieure à 75%.

En outre, tel qu'illustré par les exemples ci-dessous, les luminophores du type téréphthalate ont montré des propriétés de durabilité au rayonnement UV solaire incident et au rayonnement UV d'excitation, notamment laser, très supérieures aux autres luminophores organiques ou inorganiques.

Le mode de réalisation qui précède n'est bien évidemment en aucune façon limitatif de la présente invention, sous aucun des aspects précédemment décrits.

### Exemples :

Les exemples qui suivent permettent d'illustrer un exemple de réalisation d'un pare-brise feuilleté comprenant le luminophore selon l'invention et ses avantages:
On a d'abord synthétisé un pare-brise feuilleté, comprenant la succession de deux feuilles de verre reliées par un feuillet intercalaire de PVB d'épaisseur 760 microns. L'assemblage est réalisé selon les techniques bien connu de l'art. Préalablement au feuilletage, selon un carré de verre de dimensions d'environ 10 x 10 cm², une couche de luminophore est déposée. Le luminophore est choisi parmi différentes poudres de luminophores bien connus pour absorber fortement dans le domaine des UV, tel que reporté dans le tableau 1 qui suit. Le luminophore est incorporé dans le vitrage par une technique de sérigraphie classique. Le luminophore est déposé sur la face de la feuille de verre intérieure 2, sur la face tournée vers le feuillet PVB avant l'étape d'assemblage (voir figure). Sans sortir du cadre de l'invention, le luminophore peut également être déposé sur la face intérieure du PVB.
Plus précisément, on réalise au préalable une dilution du luminophore dans un liant de type PVB. La dilution est ajustée pour l'obtention finale d'une concentration en luminophore de 1 % en masse de pigment par rapport à la masse de liant. En règle générale, le liant contient un diluant à base d'éthanol ou d'autres solvants afin d'optimiser la viscosité pour le dépôt par sérigraphie. Les essais effectués par le demandeur ont montrés qu'il était possible de travailler avec des concentrations allant de 0,1% à 10% en masse de pigment dans un diluant, des concentrations de 0,5 à 5% donnant par ailleurs les meilleurs compromis entre la résultante du flou obtenu et la luminance observée.
Les mélanges sont ensuite sérigraphiés, selon les techniques classiques, sur la feuille de verre. L'épaisseur de la couche initiale déposée par sérigraphie, incorporant le luminophore dans le mélange PVB/éthanol, est d'environ 10 à 40 microns.

On laisse ensuite le solvant s'évaporer puis le feuilletage est réalisé entre les deux feuilles de verre et le feuillet PVB selon les techniques en autoclave classiques dans le domaine. On obtient ainsi un pare-brise tel que décrit sur la figure.

Sur les différents vitrages obtenus, on a mesuré les paramètres caractéristiques de l'application tels décrits précédemment selon les protocoles suivants :
Le flou a été mesuré selon la norme automobile Ansi Z26.1 (1996).

La résistance à la chaleur du vitrage a été réalisée conformément au test décrit dans la norme européenne ECE R43 A3/5.

La durabilité aux rayonnements UV solaires incidents a été mesurée par le test Arizona ® qui consiste à exposer le vitrage à une radiation émise par une lampe à arc au Xénon pour simuler le rayonnement solaire selon la norme ISO 4892 (partie 2) à une température de 90°C. Une telle exposition permet un vieillissement accéléré du luminophore. La mesure du temps nécessaire pour que la luminance initiale soit réduite de moitié permet d'estimer et de comparer directement et simplement les propriétés de durabilité des différents luminophores testés sous le rayonnement solaire.

La coloration du vitrage a été mesurée par le test dit « Yellowness Index » selon la norme DIN 6167, après 400 heures d'exposition du vitrage au test Arizona précédemment décrit.

La durabilité à un rayonnement laser UV d'excitation a été mesurée selon la méthode suivante :
On a dirigé un faisceau laser d'intensité de puissance 200 mW et de longueur d'onde égale à 405 nm directement sur la partie du vitrage comprenant la couche de luminophore, sur une surface d'environ 2 mm². Un luminance-mètre est dirigée vers le spot de lumière émis et on mesure en continu la luminance en cd/m².

On mesure ainsi :
- la luminance monochromatique initiale du rayonnement d'émission, une luminance monochromatique de l'ordre de plusieurs centaines de cd/m² étant jugée suffisante pour que le spot soit parfaitement visible du conducteur regardant la route dans des conditions normales d'ensoleillement, tel que décrit précédemment,
- la longueur d'onde maximale du rayonnement émis et la couleur observée par le conducteur du véhicule, par exemple,
- le temps nécessaire pour que la luminance initiale soit réduite de moitié, cette valeur caractérisant selon l'invention la durabilité du luminophore sous le rayonnement concentré incident.

L'éclairement en continu d'un spot de petite taille et immobile conduit à une dégradation rapide du luminophore et donc à une diminution rapide de sa luminance. Cette méthode sévère permet d'obtenir un vieillissement accéléré du luminophore, tout en conservant la longueur d'onde du faisceau excitateur final, mais est très éloigné des conditions normales d'utilisation, pour lesquelles la durée de vie du luminophore sera bien évidemment beaucoup plus longue. Le but d'un tel vieillissement accéléré est ainsi d'obtenir une discrimination rapide des luminophores dans l'application recherchée.
L'ensemble des résultats observés sont reportés dans le tableau 1 :

**Tableau 1**

| Nature du luminophore | BAM (minéral)* | Lum 1 (Red) :** Eu(TPBDTFA)₃Phen | Lum 2 : β-quinophtalone | Lum 3 : Naphtalimide***. | Lum 4 : Diéthyl (2-5 dihydroxy) téréphthalate |
|---|---|---|---|---|---|
| Index de jaunissement (DIN 6167) après 400h | - | Jaunissement | Pas de jaunissement | Jaunissement | Pas de jaunissement |
| Résistance à la chaleur (ECE R43 A3/5) | - | Non conforme (jaunissement) | conforme | conforme | conforme |
| Flou (haze) (%) (Ansi Z26.1 (1996)) | >5 | 0,80 | 0,47 | 0,70 | 0,79 |
| Durabilité sous rayonnement UV (Arizona) | - | 15 heures | 27 heures | 1600 heures | 1600 heures |
| λ maximale d'émission (nm) sous faisceau laser (405 nm, 200 mW) | 450 nm | 620 nm | 520 nm | 430 nm | 450 nm |
| Couleur perçue | Bleu | Rouge | Vert | Bleu-violet | Bleu |
| Luminance initiale sous faisceau laser (405 nm, 200 mW) | <30 Cd/m² | > 500 Cd/m² | > 500 Cd/m² | ~ 1800 Cd/m² | ~ 4700 Cd/m² |
| Durabilité sous excitation laser (405 nm, 200 mW) | - | 1,5 heures | 15 minutes | 21 heures | 49 heures |

| | | | | | |
|---|---|---|---|---|---|
| * BAM : BaMgAl₁₀O₁₇: Eu²⁺ **Eu(TPBDTFA)₃Phen : TPBDTFA = 1-(4'-(5-(4-tert-butylphenyl)-1,3,4-oxadiazol-2- yl)biphenyl-4-yl)-4,4,4-trifluorobutane-1,3-dione phen = (1,10-phenanthroline) *** 4,5-dimethyloxy-N-(2ethylhexyl) naphtalimide | | | | | |

Les résultats reportés dans le tableau 1 montrent que les luminophores inorganiques ne permettent pas d'obtenir des substrats suffisamment transparents pour l'application, le flou étant supérieur à 5 % pour tous les essais effectués, alors que la luminance est très inférieure à celle observée pour les luminophores organiques.

Parmi les luminophores organiques, on voit que les luminophores conventionnellement connus pour leur forte luminescence sous excitation UV présentent des durabilités extrêmement faibles sous un faisceau d'excitation concentré du type Laser ou plus radicalement sous des conditions d'ensoleillement classiques. Le luminophore selon l'invention, du type hydroxytéréphthalate, présente les meilleures propriétés de durabilité, permettant d'envisager des applications du type HUD, sous un faisceau incident concentré, notamment laser.

Dans un deuxième temps, différents additifs antioxydants ont été ajouté au luminophore diéthyl (2-5 dihydroxy) téréphthalate précédemment décrit. Ceux-ci ont été choisis parmi la famille des polyphénols (dérivés phénoliques, résorcinoliques, pyrocatecholiques, pyrogalloliques ou phloroglucinoliques) et des phénylamines (par exemple diphenyl amine).

Le luminophore est cette fois incorporé dans le vitrage par une technique de spray classique. Le luminophore est déposé, préalablement à l'assemblage sur la face de la feuille de PVB située lors de l'assemblage, du côté de la feuille de verre intérieure 2.
Plus précisément, on réalise au préalable une dilution à 1% en masse du luminophore dans un diluant à base de tétrahydrofurane (THF) afin d'optimiser la viscosité pour le dépôt par spray. Un liant tel que du PVB peut également être ajouté en respectant toutefois la condition nécessaire d'une viscosité suffisamment faible pour permettre le dépôt par spray. Les essais effectués par le demandeur ont montrés qu'il était possible de travailler avec des concentrations allant de 0,1% à 10% en masse de pigment dans un diluant, des concentrations de 0,5 à 5% donnant par ailleurs les meilleurs compromis entre la résultante du flou obtenu et la luminance observée. Selon un mode de réalisation, l'antioxydant utilisé pour l'application est une octyle/butyle di-phényl amine (IRGANOX L57, CIBA/BASF). La concentration en antioxydant est d'environ 1% en masse de la solution à déposer. Selon l'invention, le rapport entre les quantités massiques de luminophore et d'antioxydant peut être compris entre 5 parts pour 1 et 1 part pour 5. Plus classiquement un rapport massique de 1 pour 1 est utilisé.
Les mélanges sont ensuite déposés par spray, selon les techniques classiques, sur la feuille de PVB. Le dépôt est ajusté de manière à ce que la concentration en luminophore sur le produit fini soit proche de 0,5 % massique. D'une manière générale, la concentration en luminophore peut être située selon l'invention entre 0,5 et 15 g/m² (0,07 % et 2 % massique), préférentiellement entre 1 et 6 g/m² (0,1 % et 0,8 % massique). La concentration en antioxydant est comprise entre 0,01 % et 1,5 %, préférentiellement entre 0,5 % et 1 %.

On laisse ensuite le solvant s'évaporer puis le feuilletage est réalisé entre les deux feuilles de verre et le feuillet PVB selon les techniques en autoclave classiques dans le domaine. On obtient ainsi un pare-brise tel que décrit sur la figure, soit comme pour les exemples précédents.

Sur les différents vitrages obtenus, on a mesuré les paramètres caractéristiques de l'application selon les protocoles tels décrits précédemment :
Le flou a été mesuré selon la norme automobile Ansi Z26.1 (1996).

La résistance à la chaleur du vitrage a été réalisée conformément au test décrit dans la norme européenne ECE R43 A3/5.

La durabilité aux rayonnements UV solaires incidents a été mesurée par le test Arizona ®.

La coloration du vitrage a été mesurée par le test dit « Yellowness Index » selon la norme DIN 6167, après 400 heures d'exposition du vitrage au test Arizona précédemment décrit.

La durabilité à un rayonnement laser UV d'excitation a été mesurée selon la méthode suivante :
On a dirigé un faisceau laser d'intensité de puissance 100 mW et de longueur d'onde égale à 405 nm directement sur la partie du vitrage comprenant la couche de luminophore, sur un carré évidé de 5 x 5 mm². La distance comprise entre le laser et le verre durant ce test est de 58 cm. Un luminance-mètre est dirigée vers le spot de lumière émis et on mesure en continu la luminance en cd/m². Les résultats obtenus sont reportés dans le tableau 2 :

**Tableau 2**

| | | |
|---|---|---|
| Concentration en luminophore | 3,5g/m² | 3,5g/m² |
| Antioxydant : Irganox L57 (octyle/butyle diphényl amine) | - | 3,8 g/m² |
| Index de jaunissement (DIN 6167) après 400h | Pas de jaunissement | Pas de jaunissement |
| Résistance à la chaleur (ECE R43 A3/5) | conforme | conforme |
| Flou (haze) (%) (Ansi Z26.1 (1996)) | 0,79 | 0,8 |
| Durabilité sous rayonnement UV (Arizona) | - 16 % après 3000h | - 5 % après 3000h |
| λ maximale d'émission (nm) sous faisceau laser (405 nm, 100 mW) | 450 nm | 450 nm |
| Couleur perçue | Bleu | Bleu |
| Luminance initiale sous faisceau laser (405 nm, 100 mW) | ∼ 1000 Cd/m² | ∼ 1000 Cd/m² |
| Durabilité sous excitation laser (405 nm, 100 mW) | 50 % après 1000h | - 50 % après 3000h |

Les résultats reportés dans le tableau 2 montrent qu'il est possible d'améliorer encore la durabilité du luminophore de type hydroxyterephtalate par la mise en oeuvre conjointe d'un additif du type antioxydant, en particulier du type de ceux répondant à la formulation précédemment décrite.

## Revendications

1. Vitrage feuilleté pour la visualisation d'informations du type pare-brise pour automobile ou vitrage pour bâtiment, comprenant un assemblage d'au moins deux feuilles transparentes de verre inorganique ou d'une matière organique résistante, reliées entre elles par un intercalaire d'une matière thermoformable ou par des feuillets multicouches incorporant un tel intercalaire, ledit vitrage étant caractérisé en qu'un matériau luminophore du type hydroxytéréphthalate, en combinaison avec un additif antioxydant, est intégré dans ledit intercalaire, permettant ladite visualisation.

2. Vitrage feuilleté selon la revendication 1, dans lequel ledit luminophore est un hydroxyalkyltéréphthalate R-OOC-Φ(OH)ₓ-COOR, de formule développée : 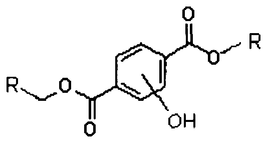 dans laquelle Φ désigne un noyau benzénique substitué par au moins un groupement hydroxy (OH), R est une chaine hydrocarbonée comprenant de 1 à 10 atomes et x est égal à 1 ou 2.

3. Vitrage feuilleté selon l'une des revendications précédentes, dans lequel ledit luminophore est un dialkyl 2-5 dihydroxytéréphthalate répondant à la formule développée :

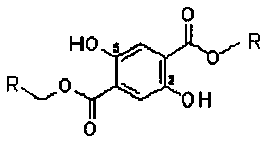

4. Vitrage feuilleté selon l'une des revendications précédentes, dans lequel ledit luminophore est le diéthyl-2,5-dihydroxytéréphthalate.

5. Vitrage feuilleté selon l'une des revendications 1 à 4 dans lequel l'additif antioxydant appartient au groupe des phénylamines.

6. Vitrage feuilleté selon la revendication précédente, dans lequel l'additif antioxydant appartient au groupe des diphénylamines.

7. Vitrage feuilleté selon l'une des revendications 1 à 4, dans lequel l'additif antioxydant comprend au moins un cycle benzénique comprenant au moins deux fonctions OH.

8. Vitrage feuilleté selon la revendication précédente, dans lequel l'additif antioxydant appartient au groupe des résorcinoliques.

9. Vitrage feuilleté selon la revendication 7, dans lequel l'additif antioxydant appartient au groupe des pyrocatecholiques.

10. Vitrage feuilleté selon la revendication 7, dans lequel l'additif antioxydant appartient au groupe des hydroquinones.

11. Vitrage feuilleté selon la revendication 7, dans lequel l'additif antioxydant appartient au groupe des pyrogalloliques.

12. Vitrage feuilleté selon la revendication 7, dans lequel l'additif antioxydant appartient au groupe des phloroglucinoliques.

13. Vitrage feuilleté selon l'une des revendications précédentes, dans lequel la matière thermoformable constituant ledit intercalaire est choisie dans le groupe des PVB, des PVC plastifiés, du polyuréthane PU ou des éthylène vinyle acétate EVA.

14. Dispositif de visualisation d'une image sur un vitrage transparent, comprenant un vitrage feuilleté selon l'une des revendications précédentes et une source génératrice de rayonnement UV concentré du type laser dont le rayonnement est compris entre 350 et 410 nm, le rayonnement UV étant dirigé vers la ou les zones du vitrage comprenant la couche de luminophore du type hydroxytéréphthalate.

## Patentansprüche

1. Verbundglasscheibe für die Anzeige von Informationen vom Typ Windschutzscheibe für Kraftfahrzeuge oder Glasscheibe für Gebäude, umfassend eine Baugruppe aus mindestens zwei transparenten Scheiben aus anorganischem Glas oder aus einem widerstandsfähigen organischen Material, die untereinander durch eine Zwischenlage aus einem thermoformbaren Material oder durch mehrschichtige Blätter, die eine solche Zwischenlage umfassen, verbunden sind, wobei die Glasscheibe **dadurch gekennzeichnet ist, dass** ein luminophores Material vom Typ Hydroxyterephthalat in Kombination mit einem oxidationshemmenden Zusatz in die Zwischenlage integriert ist und die Anzeige ermöglicht.

2. Verbundglasscheibe nach Anspruch 1, wobei der Luminophor ein Hydroxyalkylterephthalat R-OOC-Φ(OH)ₓ-COOR mit der Strukturformel 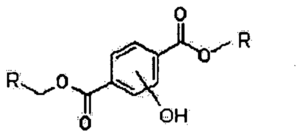 ist, wobei Φ einen Benzolkern, der durch mindestens eine Hydroxygruppe (OH) substituiert ist, bezeichnet, und R eine Kohlenwasserstoffkette ist, die 1 bis 10 Atome umfasst, und x gleich 1 oder 2 ist.

3. Verbundglasscheibe nach einem der vorhergehenden Ansprüche, wobei der Luminophor ein Dialkyl-2,5-dihydroxyterephthalat mit der Strukturformel 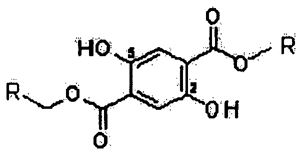 ist.

4. Verbundglasscheibe nach einem der vorhergehenden Ansprüche, wobei der Luminophor Diethyl-2,5-dihydroxyterephthalat ist.

5. Verbundglasscheibe nach einem der Ansprüche 1 bis 4, wobei der oxidationshemmende Zusatz zur Gruppe der Phenylamine gehört.

6. Verbundglasscheibe nach dem vorhergehenden Anspruch, wobei der oxidationshemmende Zusatz zur Gruppe der Diphenylamine gehört.

7. Verbundglasscheibe nach einem der Ansprüche 1 bis 4, wobei der oxidationshemmende Zusatz mindestens einen Benzolring umfasst, der mindestens zwei OH-Gruppen umfasst.

8. Verbundglasscheibe nach dem vorhergehenden Anspruch, wobei der oxidationshemmende Zusatz zur Gruppe der Resorcinderivate gehört.

9. Verbundglasscheibe nach Anspruch 7, wobei der oxidationshemmende Zusatz zur Gruppe der Pyrocatecholderivate gehört.

10. Verbundglasscheibe nach Anspruch 7, wobei der oxidationshemmende Zusatz zur Gruppe der Hydroquinonderivate gehört.

11. Verbundglasscheibe nach Anspruch 7, wobei der oxidationshemmende Zusatz zur Gruppe der Pyrogallolderivate gehört.

12. Verbundglasscheibe nach Anspruch 7, wobei der oxidationshemmende Zusatz zur Gruppe der Phloroglucinderivate gehört.

13. Verbundglasscheibe nach einem der vorhergehenden Ansprüche, wobei das thermoformbare Material, das die Zwischenlage darstellt, aus der Gruppe der PVB, der Weich-PVC, Polyurethan PU oder der Ethyleninylacetate EVA ausgewählt ist.

14. Vorrichtung zum Anzeigen eines Bildes auf einer transparenten Glasscheibe, umfassend eine Verbundglasscheibe nach einem der vorhergehenden Ansprüche und eine Quelle zum Erzeugen konzentrierter UV-Strahlung vom Typ Laser, deren Strahlung zwischen 350 und 410 nm liegt, wobei die UV-Strahlung in Richtung der Zone/Zonen der Glasscheibe gerichtet ist, die die Luminophorschicht vom Typ Hydroxyterephthalat umfasst/umfassen.

## Claims

1. Laminated glazing for information display, of the automobile windshield or architectural glazing type, comprising an assembly of at least two transparent sheets of inorganic glass or of a strong organic material, joined together by an interlayer of a thermoformable material or by multilayer foils incorporating such an interlayer, said glazing being **characterized in that** a luminophore material of the hydroxyterephthalate type, in combination with an antioxidant additive, is integrated into said interlayer, allowing said display.

2. The laminated glazing as claimed in claim 1, in which said luminophore is a hydroxyalkylterephthalate R-OOC-C(OH)ₓ-COOR, of developed formula: 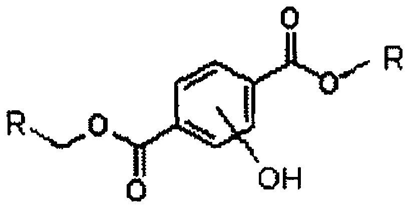 in which Φ denotes a benzene ring substituted with at least one hydroxyl (OH) group, R is a hydrocarbon chain comprising 1 to 10 carbon atoms and x is equal to 1 or 2.

3. The laminated glazing as claimed in either of the preceding claims, in which said luminophore is a dialkyl-2,5-dihydroxyterephthalate satisfying the developed formula:

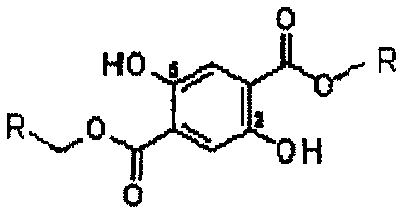

4. The laminated glazing as claimed in one of the preceding claims, in which said luminophore is diethyl-2,5-dihydroxyterephthalate.

5. The laminated glazing as claimed in one of claims 1 to 4 in which the antioxidant additive belongs to the phenylamine group.

6. The laminated glazing as claimed in the preceding claim, in which the antioxidant additive belongs to the diphenylamine group.

7. The laminated glazing as claimed in one of claims 1 to 4, in which the antioxidant additive comprises at least one benzene cycle comprising at least two OH functions.

8. The laminated glazing as claimed in the preceding claim, in which the antioxidant additive belongs to the resorcinol group.

9. The laminated glazing as claimed in claim 7, in which the antioxidant additive belongs to the pyrocatechol group.

10. The laminated glazing as claimed in claim 7, in which the antioxidant additive belongs to the hydroquinone group.

11. The laminated glazing as claimed in claim 7, in which the antioxidant additive belongs to the pyrogallol group.

12. The laminated glazing as claimed in claim 7, in which the antioxidant additive belongs to the phloroglucinol group.

13. The laminated glazing as claimed in one of the preceding claims, in which the thermoformable material constituting said interlayer is chosen from the group consisting of PVBs, plasticized PVCs, polyurethane (PU) and ethylene-vinyl acetates (EVAs).

14. A device for displaying an image on transparent glazing, comprising laminated glazing as claimed in one of the preceding claims and a source generating concentrated UV radiation of the laser type, the radiation of which is between 350 and 410 nm, the UV radiation being directed onto the area or areas of the glazing comprising the hydroxyterephthalate-type luminophore layer.
